# EUROPEAN PATENT APPLICATION

(11) **EP 4 039 742 A1**
(43) Date of publication of application: **10.08.2022**
(21) Application number: 21155234.4
(22) Date of filing: 04.02.2021
(51) Int. Cl.: C08L 21/00, C08L 63/00, C08L 9/02

(54) **RUBBER COMPOSITIONS WITH IMPROVED ADHESION**

(71) Applicant: SIKA TECHNOLOGY AG, 6340 Baar (CH)
(72) Inventor: MENDONCA, Alison, 05376-180 Sao Paulo (BR); PERES, Gabriel, 05305-012 Sao Paulo (BR)
(74) Representative: Sika Patent Attorneys

(57) **Abstract**

The present application is directed to a rubber composition comprising at least one liquid epoxy resin, at least one rubber, at least at least one curing agent for epoxy resins, at least one substituted urea and at least one azo compound AZ, wherein the weight-ratio of the at least one liquid epoxy resin A to the at least one substituted urea UR (A/UR) is from 8 to 20.

These rubber compositions provide the advantage that they provide good adhesion on substrates, especially metal substrates, while at the same time provide appropriate mechanical properties for sealing purposes.

## Description

### Technical field

The present invention relates to a rubber composition and in particular relates to a rubber composition which is suitable for sealing hollow parts of vehicle body such as a pillar of a vehicle and then cures by the heat of a baking process.

### Background art

Manufactured products often contain hollow parts that result from the manufacturing process and/or that are designed into the product for various purposes, such as weight reduction. Automotive vehicles, for example, include several such hollow parts throughout the vehicle, including in the vehicle's roof, front/centre/rear pillar, engine hood, trunk hood and in vehicle doors. It is often desirable to seal the parts/substrates forming the hollow parts additionally at least at certain places to prevent humidity to enter.

A suitable rubber composition to seal these parts/substrates for corrosion reduction can adhere properly when heat is applied. For example, during the manufacture process of a vehicle, the hollow parts of a vehicle can contain applied beads of an uncured rubber composition before being covered with electro-coating liquid while applied beads of an uncured rubber composition are already inserted, and afterwards during a heat treatment step, the rubber composition cures and firmly connects to the substrate in order to minimise humidity to enter said hollow parts.

Obtaining a cured rubber composition, that has appropriate mechanical properties for sealing purposes and good the adhesion on substrates, especially metal substrates, is difficult to obtain.

It is thus desirable to obtain a thermally curable rubber composition that provides good adhesion on substrates, especially metal substrates, while at the same time providing appropriate mechanical properties for sealing purposes.

### Description of the invention

In a first aspect, the present application is directed at a rubber composition comprising:
- at least one liquid epoxy resin **A,** preferably in an amount of 4 to 20 wt.-%, preferably 6 to 15 wt.-%, more preferably 7 to 12 wt.-%, most preferably 7.5 to 10 wt.-%, based on the total weight of the rubber composition;
- at least one rubber, preferably a synthetic rubber, more preferably a diene rubber;
- at least at least one curing agent **CA,** preferably a latent curing agent, for epoxy resins;
- at least one substituted urea **UR;**
- at least one azo compound **AZ,** preferably selected from the list consisting of azodicarbonamide, azoisobutytronitrile, azocyclohexyl nitrile and azodiamino benzene, more preferably azodicarbonamide;
- preferably at least one polyvinylchloride resin and/or acrylic resin powder;
wherein the weight-ratio of the at least one liquid epoxy resin **A** to the at least one substituted urea **UR (A/UR)** is from 8 to 20, preferably 10 to 16, more preferably 11 to 15, most preferably 11.5 to 13.5.

The inventive rubber composition comprises at least one liquid epoxy resin **A.** The liquid epoxy resin is a material which is liquid or at least flowable at 23°C. Polyepoxides which are known to the person skilled in the art as "reactive diluents" are also referred to in the present document as liquid epoxy resins.

Preferred liquid epoxy resins for use in the inventive composition include liquid resins of the formula (I) 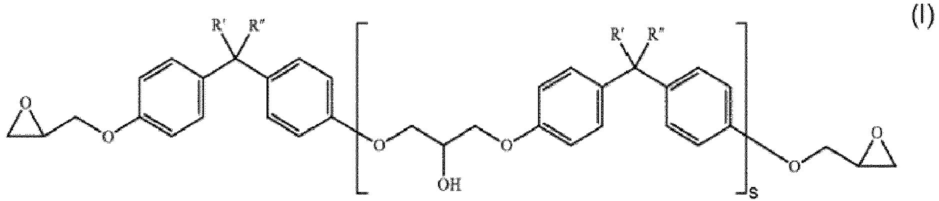 where R' and R" are each independently a hydrogen atom or a methyl group, and s has an average value of 0 to 1. Preference is given to those liquid resins of the formula (I) in which the index s has an average value of less than 0.2.

The liquid epoxy resins of the formula (I) are diglycidyl ethers of bisphenol A, bisphenol F and bisphenol A/F, where A represents acetone and F formaldehyde, which serve as reactants for preparation of these bisphenols. A bisphenol A liquid resin accordingly has methyl groups, a bisphenol F liquid resin hydrogen atoms, and a bisphenol A/F liquid resin both methyl groups and hydrogen atoms, as R' and R" in formula (I). In the case of bisphenol F, it is also possible for positional isomers to be present, especially derived from 2,4'- and 2,2'-hydroxyphenylmethane.

Such liquid epoxy resins are commercially available, for example as Araldite^{®} GY 204, Araldite^{®} GY 250, Araldite^{®} GY 260, Araldite^{®} GY 281 , Araldite^{®} GY 282, Araldite^{®} GY 285, Araldite^{®} PY 304, Araldite^{®} PY 720 (from Huntsman); D.E.R.^{®} 330, D.E.R.^{®} 331 , D.E.R.^{®} 332, D.E.R.^{®} 336, D.E.R.^{®} 354, D.E.R.^{®} 351 , D.E.R.^{®} 352, D.E.R.^{®} 356 (from Dow); Epikote^{®} 162, Epikote^{®} 827, Epikote^{®} 828, Epikote^{®} 158, Epikote^{®} 862, Epikote^{®} 169, Epikote^{®} 144, Epikote^{®} 238, Epikote^{®} 232, Epikote^{®} 235 (from Hexion), Epalloy^{®} 7190, Epalloy^{®} 8220, Epalloy^{®} 8230, Epalloy^{®} 7138, Epalloy^{®} 7170, Epalloy^{®} 9237-70 (from CVC), Chem Res^{®} E 20, Chem Res^{®} E 30 (from Cognis), Beckopox^{®} EP 1 16, Beckopox^{®} EP 140 (from Cytec), Epiclon EXA-4850 (from Sun Chemical).

Further suitable liquid epoxy resins are the glycidylization products of dihydroxybenzene derivatives such as resorcinol, hydroquinone and catechol; further bisphenols or polyphenols such as bis(4-hydroxy-3-methylphenyl)methane, 2,2-bis(4-hydroxy-3-methylphenyl)propane (bisphenol C), bis(3,5-dimethyl-4-hydroxyphenyl)methane, 2,2-bis(3,5-dimethyl-4-hydroxy- phenyl)propane, 2,2-bis(3,5-dibromo-4-hydroxyphenyl)propane, 2,2-bis(4-hydroxy-3-tert-butyl-phenyl)propane, 2,2-bis(4-hydroxyphenyl)butane (bisphenol B), 3,3-bis(4-hydroxyphenyl)pentane, 3,4-bis(4-hydroxyphenyl)hexane, 4,4-bis(4-hydroxyphenyl)-heptane, 2,4-bis(4-hydroxyphenyl)-2-methylbutane, 2,4-bis(3,5-dimethyl-4-hydroxyphenyl)-2-methylbutane, 1,1-bis(4-hydroxyphenyl)cyclohexane (bisphenol Z), 1,1-bis(4-hydroxyphenyl)-3,3,5-trinnethylcyclohexane (bisphenol TMC), 1,1-bis(4-hydroxyphenyl)-1-phenyl-ethane, 1,4-bis[2-(4-hydroxyphenyl)-2-propyl]benzene) (bisphenol P), 1,3-bis[2-(4-hydroxyphenyl)-2-propyl]benzene) (bisphenol M), 4,4'-dihydroxydiphenyl (DOD), 4,4'-dihydroxybenzophenone, bis(2-hydroxynaphth-1-yl)methane, bis(4-hydroxynaphth-1-yl)methane, 1,5-dihydroxynaphthalene, tris(4-hydroxyphenyl)nnethane, 1,1,2,2-tetrakis(4- hydroxyphenyl)ethane, bis(4-hydroxyphenyl)ether, bis(4-hydroxyphenyl) sulfone; condensation products of phenols with formaldehyde, which are obtained under acidic conditions, such as phenol novolacs or cresol novolacs; aromatic amines, such as aniline, toluidine, 4-aminophenol, 4,4'-methylenediphenyldiamine (MDA), 4,4'-methylenediphenyldi(N-methyl)amine, 4,4'-[1,4-phenylenebis(1 - methylethylidene)]bisaniline (bisaniline P), 4,4'-[1,3- phenylenebis(1 - methylethylidene)]bisaniline (bisaniline M).

In a further embodiment, the liquid epoxy ersin is an aliphatic or cycloaliphatic polyepoxide, for example diglycidyl ether; a glycidyl ether of a saturated or unsaturated, branched or unbranched, cyclic or open-chain C2 to C3 diol, for example ethylene glycol, propylene glycol, butylene glycol, hexanediol, octanediol, a polypropylene glycol, dimethylolcyclohexane, neopentyl glycol; a glycidyl ether of a tri- or tetrafunctional, saturated or unsaturated, branched or unbranched, cyclic or open-chain polyol such as castor oil, trimethylolpropane, trimethylolethane, penta-erythritol, sorbitol or glycerol, and alkoxylated glycerol or alkoxylated trimethylolpropane; a hydrogenated bisphenol A, F or A/F liquid resin, or the glycidylization products of hydrogenated bisphenol A, F or A F; an N-glycidyl derivative of amides or heterocyclic nitrogen bases, such as triglycidyl cyanurate and thglycidyl isocyanurate, and reaction products of epichlorohydrin and hydantoin.

Aliphatic or cycloaliphatic liquid epoxy resins are, for example, commercially available as Araldite^{®} DY-C, Araldite^{®} DY-F, Araldite^{®} DY-H, Araldite^{®} DY-T, Araldite^{®} DY 0397, Araldite^{®} DY 3601 (from Huntsman), D.E.R.^{®} 732, D.E.R.^{®} 736 (from Dow); Heloxy^{®} BD, Heloxy^{®} HD, Heloxy^{®} TP, Epikote^{®} 877 (from Hexion), Beckopox^{®} EP 075 (from Cytec). Mixtures of aliphatic or cycloaliphatic polyepoxides and aromatic epoxides of the formula (I) can also be used, such is in particular mixtures of diglycidyl ethers of bisphenol A, bisphenol F and bisphenol A/F and diglycidylethers of α,ω-alkandiols, wherein the α,ω-alkandiols preferably comprise 2 to 10 carbon atoms. Such mixtures are commercially available for example from Dow as D.E.R. 358.

In a further embodiment, the liquid epoxy resin is a polyepoxide which has been prepared from the oxidation of olefins, for example from the oxidation of vinylcyclohexene, dicyclopentadiene, cyclohexadiene, cyclododecadiene, cyclododecatriene, isoprene, 1,5-hexadiene, butadiene, polybutadiene or divinylbenzene.

The liquid epoxy resin is preferably a liquid resins of the formula (I) as described above, more preferably the versions thereof described as preferred above.

A particular preferred liquid epoxy resin in the context of the present application is an epoxy resin based on bisphenol A diglycidylether having an epoxy equivalent weight of 156 to 250 g/eq, such as D.E.R.^{®} 331 from Dow.

The liquid epoxy resins **A** are preferably included into the rubber composition in an amount of 4 to 20 wt.-% based on the total weight of the rubber composition. In a yet preferred embodiment, the liquid epoxy resin **A** is incorporated into the rubber composition in an amount of 6 to 15 wt.-%, more preferably 7 to 12 wt.-%, most preferably 7.5 to 10 wt.-%, based on the total weight of the rubber composition.

The rubber composition further comprises at least one substituted urea **UR.** This substituted urea **UR** that can be an aromatically substituted urea or an aliphatically substituted urea.

Preferred aromatically substituted ureas are selected from the list consisting of p-chlorophenyl-N,N- dimethylurea (MONURON), 3-phenyl-1 , 1-dimethylurea (FENURON) or 3,4-dichlorophenyl-N,N- dimethylurea (DIURON).

Preferably, the substituted urea **UR** is of the formula (Ia) or (Ib) 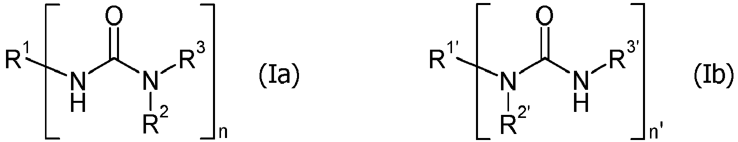 In formula (Ia), R¹ is H or an n-valent aliphatic, cycloaliphatic or araliphatic radical. Additionally, R² and R³
either
each independently of one another are an alkyl group or aralkyl group;
or
together are a divalent aliphatic radical having 3 to 20 C atoms which is part of an optionally substituted heterocyclic ring having 5 to 8, preferably 6, ring atoms.
Finally, n is from 1 to 4, more particularly 1 or 2.

In formula (Ib), R^{1'} is an n'-valent aliphatic, cycloaliphatic or araliphatic radical.
R^{2'} is an alkyl group or aralkyl group or alkylene group.
R^{3'} independently at each occurrence is H or an alkyl group or aralkyl group.
Finally, n' is from 1 to 4, more particularly 1 or 2.

The term "independently of one another" or "independently at each occurrence" in the definition of groups and radicals means that two or more groups which occur that are referred to identically in the formula may in each case have different definitions.

An "araliphatic radical" is understood in this document to be an aralkyl group, i.e., an alkyl group which is substituted by aryl groups (cf. Römpp, CD Römpp Chemie Lexikon, Version 1, Stuttgart/New York, Georg Thieme Verlag 1995).

Preferably, the substituted urea **UR** is of the formula (Ia).

In one preferred embodiment, R¹ is
alternatively
an alkylene group having 4 to 10 carbon atoms, more particularly a hexamethylene group,
or is 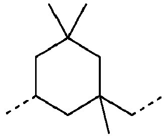 or
is a biuret or an isocyanurate of an aliphatic or araliphatic diisocyanate, following removal of the isocyanate groups;
   or
is a xylylene group, more particularly a m-xylylene group.

Particular preferred as R¹ is HDI, IPDI, HDI biuret, and XDI, following removal of the NCO groups.

R² and R³ particularly suitably together form a butylene, pentamethylene or hexamethylene group, preferably a pentamethylene group.

Preferably, R² and R³ independently of one another are each an alkyl group having from 1 to 5 carbon atoms, more particularly each independently of one another a methyl, ethyl or propyl group, preferably each a methyl group.

Most preferably, R¹ is H. This is especially preferred in the case where R² and R³ independently of one another are each a methyl, ethyl or propyl group, preferably each a methyl group.

The substituted urea **UR** preferably has a molecule of less than 1000 g/mol, more particularly between 80 and 800 g/mol, more preferably between 80 and 500 g/mol, most preferably between 80 and 200 g/mol.

The weight-ratio of the at least one liquid epoxy resin **A** to the at least one substituted urea **UR (A/UR)** is from 8 to 20, preferably 10 to 16, more preferably 11 to 15, most preferably 11.5 to 13.5.

Surprisingly it was found that mentioned ranges are advantageous with respect to better values in elongation and lower E-modulus. This can be seen for example in the comparison of E1 with E2. The lowering of the E-modulus is especially preferred for sealing purposes. An E-modulus of 3 to 5 MPa has the advantage of being a preferred range for sealing purposes but not too high like for more structural applications. An elongation of 100 to 200% has the advantage of being especially preferred for sealing purposes.

However, weight-ratios **(A/UR)** of more than 20 lead to insufficient adhesion on metal substrates. This can be seen for example in the comparison of R2 with E1. On the other side, weight-ratios **(A/UR)** of less than 8 lead to too high values for the E-modulus.

Preferably, the amount of substituted urea **UR** is 0.4 to 1.0 wt.-%, preferably 0.5 to 0.8 wt.-%, more preferably 0.55 to 0.75 wt.-%, most preferably 0.6 to 0.7 wt.-%, based on the total weight of the rubber composition.

The rubber composition contains at least one rubber, in particular a synthetic rubber and preferably a diene rubber. The at least one rubber is more preferably selected from the group consisting of acrylonitrile-isoprene copolymer rubber (NIR), acrylonitrile-butadiene copolymer rubber (NBR), styrene-butadiene copolymer rubber (SBR), a butadiene rubber (BR) and isoprene rubber (IR), especially preferred selected from the group consisting of acrylonitrile-butadiene copolymer rubber (NBR) and butadiene rubber (BR).

Preferably, the at least one rubber is incorporated in an amount from 0.5 to 15 %, preferably 1 to 10 wt.-%, preferably 1 to 5 wt.-%, more preferably 1 to 3 wt.-% and most preferably 1.5 to 2.5 wt.-%, relative to the total weight of the rubber composition.

As another mandatory ingredient, the inventive rubber composition comprises at least one azo compound **AZ,** preferably selected from the list consisting of azodicarbonamide, azoisobutytronitrile, azocyclohexyl nitrile and azodiamino benzene, more preferably azodicarbonamide.

It was surprisingly found that the addition of the azo compound **AZ** leads to good adhesion in metal surfaces whereas the addition of sodium bicarbonate (NaHCO₃) or dinitrosopentamethylene tetramine (DNPT) did not improve adhesion on metal surfaces. This can be seen for example in the comparison of E5 with R4 and R5 in table 1.

The amount of the at least one azo compound **AZ** preferably is 0.05 to 1.5 wt.-%, preferably 0.075 to 1.0 wt.-%, more preferably 0.08 to 0.5 wt.-%, most preferably 0.09 to 0.3 wt.-%, based on the total weight of the rubber composition.

It is further preferred, if the weight-ratio of the at least one liquid epoxy resin **A** to the at least one azo compound **AZ (A/AZ)** is from 5.5 to 150, preferably 8.0 to 100, more preferably 15 to 90, most preferably 25 to 85.
Higher ratios than the preferred ranges mentioned before have the disadvantage of decreased adhesion on metal surfaces.

Lower ratios have the disadvantage of low values for elongation and E-modulus and decreased adhesion on metal substrates.

The rubber composition of the present application also contains a curing agent for the liquid epoxy resin. As the curing agent, a latent curing agent is preferably used which preferably provides curing by heating and can be activated at temperatures of between 80 to 250°C.
Preferably the latent curing agent is selected from the list consisting of dicyandiamide, 4,4'-diaminodiphenylsulphone and melamine derivatives. These curing agents may be used independently or as a mixture of two or more of them depending on the curing conditions and their properties. A particularly preferred curing agent for use in the context of the present application is dicyandiamide.

Preferably, the amount of the at least one curing agent **CA** is 0.05 to 1.5 wt.-%, preferably 0.075 to 1.0 wt.-%, more preferably 0.08 to 0.5 wt.-%, most preferably 0.09 to 0.3 wt.-%, based on the total weight of the rubber composition.
Amounts higher than the preferred ranges mentioned before have the disadvantage of high E-module values and low elongation values.

It is further preferred, if the weight-ratio of the at least one liquid epoxy resin **A** to the at least one curing agent **CA (A/CA)** is from 5.5 to 150, preferably 8.0 to 100, more preferably 15 to 90, most preferably 25 to 85.

Higher ratios than the preferred ranges mentioned before have the disadvantage of decreased adhesion on metal surfaces. Lower ratios have the disadvantage of decreased values for elongation and high values for E-modulus.

It is further preferred, if the weight-ratio of the at least one substituted urea **UR** to the at least one curing agent **CA (UR/CA)** is from 2.0 to 10, preferably 2.5 to 8, more preferably 3.0 to 7.0, most preferably 4.0 to 6.5.

It is further preferred, if the weight-ratio of the at least one substituted urea **UR** to the at least one azo compound **AZ (UR/AZ)** is from 2.0 to 10, preferably 2.5 to 8, more preferably 3.0 to 7.0, more preferably 3.0 to 5.0, most preferably 3.0 to 4.0.

Preferably, the inventive rubber composition further comprises at least one polyvinylchloride resin and/or acrylic resin powder, more preferably a polyvinylchloride resin.

The polyvinylchloride (PVC) resin in the composition can be a polyvinylchloride homo- or a copolymer, preferably a polyvinylchloride copolymer. If the polyvinylchloride is a copolymer it preferably comprises vinyl esters such as vinyl acetate or vinyl propionate as the comonomer to vinylchloride. The amount of the co-monomer preferably ranges from 1 to 25%, more typically is in the range of from 2 to 20%, 2 to 15%, 2 to 10% and most preferably 3 to 7%, relative to the total weight of the copolymer.

A suitable PVC-homopolymer in the context of the present application is Formolon KVH from Formosa. A particularly suitable PVC copolymer in the context of the present application is Formolon F40 also from Formosa.

The acrylic resin powder, which may be used instead or in addition to the polyvinyl chloride resin, is not particularly limited, except that it is preferably solid at 23°C. More preferably, the acrylic resin powder has a glass transition temperature Tg in the range of 50°C to 120°C and even more preferably in the range of 70°C to 90°C. The glass transition temperature is determined by DSC. In addition, it is preferred that the acrylic resin powder is capable of forming a plastisol.

The acrylic resin in the acrylic resin powder may be a homopolymer or a copolymer. A preferred acrylic resin is a resin based on methylmethacrylate, such as those available as Dianal LP-3106 or Dianal LP-3202 for Dianal America Inc. Another commercially available acrylic resin which can be used with advantage in the present application is Kane Ace U506 from Kaneka.

The polyvinyl chloride resin or resins and/or the acrylic resin powder or powders are preferably included into the rubber composition in an amount ranging from 5 to 45 wt.-%, preferably in an amount of 10 to 40 wt.-%, preferably in an amount of 15 to 35 wt.-% and most preferably in an amount of from 20 to 30 wt.-%, based on the total weight of the rubber composition.
A further ingredient which can be used with advantage in the rubber composition of the present application is a plastizicer. Therefore, the rubber composition of the present application preferably comprises at least one plasticizer. The combination of low viscosity plasticizers and PVC and/or acrylic resin powder can be advantageous for a stable paste-like state.

As the plasticizer, any substance may be used. Preferred as plasticizers are phthalate esters such as di(2-ethylhexyl)phthalate, butyl benzyl phthalate, dinonylphthalate, diisononylphthalate (DIDP), diisodecylphthalate (DIDP), diundecylphthalate, ditridecylphthalate (DTDP), diheptylphthalate and butylphthalylbutylglycolate; aliphatic dibasic acid esters such as dioctyl adipate, didecyl adipate and dioctysebacate; polyglycolbenzoic acid esters such as polyoxyethylene glycol dibenzoate and polyoxypropylene glycol dibenzoate; phosphate esters such as tributylphosphate and tricresylphosphate; hydrocarbons such as alkyl-substituted diphenyl, alkyl-substituted terphenyl, partially hydrogenated terphenyl, aromatic processing oil and pile oil. These plasticizers may be used singly or as a mixture of two or more kinds thereof. Preferred among the afore-mentioned plasticizers in the context of the present application are phthalate esters, in particular diiosnonylphthalate (DINP), ditridecylphthalate (DTDP) and Diisodecylphthalate (DIDP).

A preferred amount of plasticizer in the rubber composition is an amount of 10 to 45 wt.-%, preferably from 20 to 40 wt.-% and in particular 25 to 35 wt.-%, based on the total weight of the rubber composition.

Next to the afore-mentioned ingredients, the rubber composition of the present application in addition preferably comprises a filler, in particular an inorganic filler. Preferred inorganic fillers are selected from the list consisting of calcium carbonate, silica, clay, and fly ash, preferably calcium carbonate and silica. These inorganic fillers may be used singly or as a mixture of two or more kinds thereof. It is also possible to use more than one modification of a filler such as e.g. different modifications of calcium carbonate.

A preferred amount of filler is an amount of 10 to 55 wt.-%, preferably from 15 to 45 wt.-% and more preferably from 20 to 35 wt.-%, based on the total weight of the rubber composition.

The rubber composition of the present application can in addition contain an appropriate amount of other additives as required, e.g., thixotropy imparting agents such as organic bentonite, fumed silica, castor oil derivatives, pigments such as carbon black, titanium dioxide, zinc dioxide or other inorganic pigments, dehydrating agents such as calcium oxide and powder silica gel and/or PVC-stabilizing agents.

The amount of these additional additives is not particularly limited, however it is preferred that content does not exceed 10 wt.-%, more preferably is 5 wt.-% or less and even more preferably is 2 wt.-% or less.

Preferably, the rubber composition contains less than 1 wt.-%, preferably less than 0.75 wt.-%, preferably less than 0.5 wt.-%, preferably less than 0.1 wt.-%, more preferably less than 0.05 wt.-%, most preferably none, of a blowing agent **BA**. Excluded from said blowing agents **BA** are the at least one azo compound **AZ,** the at least at least one curing agent **CA.**

Said blowing agent **BA** may be a chemical or physical blowing agent. Chemical blowing agents are organic or inorganic compounds that decompose under influence of, e.g., temperature or humidity, while at least one of the formed decomposition products is a gas. Physical blowing agents include, but are not limited to, compounds that become gaseous at a certain temperature. Thus, both chemical and physical blowing agents are suitable to cause an expansion in the thermally expandable composition.

Such chemical blowing agents **BA** include but are not limited to hydrazides, nitroso compounds, carbamates, and carbazides.

Such chemical blowing agents **BA** include also dual chemical systems, such as acid/base systems that generate gases upon reaction. One preferred example is sodium hydrogen carbonate and citric acid, a system that generates carbon dioxide when combined in a suitable medium.

Suitable physical blowing agents **BA** include expandable microspheres, consisting of a thermoplastic shell filled with thermally expandable fluids or gases. An example for such suitable microspheres are Expancel^{®} microspheres (by AkzoNobel).

The heat required for the decomposition reaction that causes the foaming (expansion) can be applied externally or internally, the latter e.g. from an exothermic reaction. Typically, the blowing agent is activated (i.e. decomposes under gas release) at a temperature of less than 200°C, especially between 80°C to 150°C.

At 23°C, the rubber composition preferably has a viscosity which is suitable for pumping and preferably has a paste-like viscosity. The viscosity of the rubber composition at 23°C is preferably in the range of 50 to 500 Pa.s and preferably 100 to 300 Pa.s, when measured by means of a rheometer with heatable plate (MCR 301, AntonPaar) (gap 1000 µm, measuring plate diameter: 25 mm (plate/plate), deformation 0.01-10 % at 5 Hz, temperature: 23°C). When the viscosity is lower than 50 Pa.s, dripping can more easily occur and the shape cannot sufficiently be maintained during processing. If on the other hand, the viscosity exceeds 500 Pa.s, the workability of the material is reduced.

In a specifically preferred embodiment of the present application the rubber composition of the present application comprises:
- at least one liquid epoxy resin **A,** preferably of the of the formula (I), preferably in an amount of 4 to 20 wt.-%, preferably 6 to 15 wt.-%, more preferably 7 to 12 wt.-%, most preferably 7.5 to 10 wt.-%;
- at least one rubber, preferably a synthetic rubber, more preferably a diene rubber, preferably in an amount of 0.5 to 15 %, preferably 1 to 10 wt.-%, preferably 1 to 5 wt.-%, more preferably 1 to 3 wt.-% and most preferably 1.5 to 2.5 wt.-%;
- at least at least one curing agent **CA,** preferably a latent curing agent, for epoxy resins, preferably dicyandiamide, preferably in an amount of 0.05 to 1.5 wt.-%, preferably 0.075 to 1.0 wt.-%, more preferably 0.08 to 0.5 wt.-%, most preferably 0.09 to 0.3 wt.-%;
- at least one substituted urea **UR,** preferably of the formula (Ia), more preferably R¹ being H and R² and R³ independently of one another being each a methyl, ethyl or propyl group, preferably each a methyl group, preferably in an amount of 0.4 to 1.0 wt.-%, preferably 0.5 to 0.8 wt.-%, more preferably 0.55 to 0.75 wt.-%, most preferably 0.6 to 0.7 wt.-%;
- at least one azo compound **AZ**, preferably selected from the list consisting of azodicarbonamide, azoisobutytronitrile, azocyclohexyl nitrile and azodiamino benzene, more preferably azodicarbonamide, preferably in an amount of 0.05 to 1.5 wt.-%, preferably 0.075 to 1.0 wt.-%, more preferably 0.08 to 0.5 wt.-%, most preferably 0.09 to 0.3 wt.-%;
- preferably at least one polyvinylchloride resin and/or acrylic resin powder, preferably at least one polyvinylchloride resin, preferably in an amount ranging from 5 to 45 wt.-%, preferably in an amount of 10 to 40 wt.-%, preferably in an amount of 15 to 35 wt.-% and most preferably in an amount of from 20 to 30 wt.-%;
- preferably at least one plasticizer, preferably phthalate esters, preferably in an amount of 10 to 45 wt.-%, preferably from 20 to 40 wt.-% and in particular 25 to 35 wt.-%;
- preferably at least one filler, preferably inorganic filler, preferably in an amount of 10 to 55 wt.-%, preferably from 15 to 45 wt.-%.
The above mentioned wt.-% are based on the total weight of the rubber composition.

The weight-ratio of the at least one liquid epoxy resin **A** to the at least one substituted urea **UR (A/UR)** is from 8 to 20, preferably 10 to 16, more preferably 11 to 15, most preferably 11.5 to 13.5.

Preferably, the weight-ratio of the at least one liquid epoxy resin **A** to the at least one curing agent **CA (A/CA)** is from 5.5 to 150, preferably 8.0 to 100, more preferably 15 to 90, most preferably 25 to 85.

It is further preferred, if the weight-ratio of the at least one liquid epoxy resin **A** to the at least one azo compound **AZ (A/AZ)** is from 5.5 to 150, preferably 8.0 to 100, more preferably 15 to 90, most preferably 25 to 85.

Preferably, the specifically preferred embodiment mentioned before consists of more than 80 wt.-%, preferably more than 90 wt.-%, preferably more than 95 wt.-%, more preferably more than 98 wt.-%, of the components mentioned in the preferred embodiment.

The rubber composition of the invention can be produced by mixing the ingredients mentioned above by a mixer. The type of the mixer to be used is not particularly limited and includes, for example, various mixers such as a planetary mixer and a kneader.

Preferably, the uncured rubber composition has the following properties:
Penetration: 200-300 1/10mm, preferably 250-350 1/10mm, more preferably 250-300 1/10mm, according the testing methods described in the experimental section.

Preferably, the cured rubber composition has the following properties:
Adhesion: cohesive failure, according the testing methods described in the experimental section.
Elongation: 100-300%, preferably 100-200%, according the testing methods described in the experimental section.
E-modulus: 2-10 MPa, preferably 3-5 MPa, according the testing methods described in the experimental section.
Expansion: 0-100%, preferably 0-50%, more preferably 0-30%, according the testing methods described in the experimental section.

In a second aspect, the invention is directed at a cured rubber composition which is obtainable by heating the rubber composition as described above to a temperature above the activating temperature of the curing agent. Preferably, the temperature to which the rubber composition is heated should not exceed 210°C and in particular should be in the range of 140 to 200°C and more preferably 155 to 200°C. Preferably the composition is heated for 10 to 60 min, preferably 15 to 15 min, more preferably 20 to 40 min, at beforementioned temperature.

In addition, it is preferred that the cured composition has an expansion of less than 100 %, preferably less than 80 %, more preferably less than 70 %, more preferably less than 50 %, more preferably less than 30 %, most preferably less than 20 %, relative to its volume in the uncured state, if cured at a temperature of 160 °C for 25 min, preferably as described in the experimental section.

The rubber composition can be used with advantage to be applied (e.g. by extrusion) robotically into closed spaces and cured therein to provide a cured composition which isolates from moisture. Therefore, in one aspect the present invention is also directed at a use of rubber composition as described above as a sealant for closed spaces and in particular as a sealant for closed spaced in vehicle parts. The rubber composition is suitably used for the formation of an sealing in the closed spaces in which moisture can enter during the operation of a car. Such closed spaces include in particular a front pillar (A pillar), a centre pillar (B pillar), a rear pillar (C pillar), a wheel arch (tire house) and a side sill.

The present application in a further embodiment is directed at a method for filling a closed space comprising the steps of
- a) applying a rubber composition as described above into a closed space, and
- b) heating the closed space with the rubber composition to a temperature above the activation temperature of the curing agent to cure the rubber composition.

Preferably, the rubber composition in step b) is heated to a temperature of 140 to 200°C and more preferably 155 to 200°C. Preferably the composition is heated for 10 to 60 min, preferably 15 to 15 min, more preferably 20 to 40 min, at beforementioned temperature.

For preferred embodiments of the rubber composition and the closed space in this method the abovementioned statements apply analogously.

Since the method is particularly useful in automobile fabrication, it is preferred for the method that the closed space is a closed space in a vehicle part. Moreover, it is preferred that the closed space has a metal surface and in particular an oily metal surface.

In a yet further embodiment, the present application is directed at a vehicle part which is obtainable by the above-described method.

### Examples

Each component of table 1 was compounded according to the indicated amount shown in Table 2.
The compositions E1-E5 are compositions according to the present invention, the compositions R1-R11 are comparative examples.

**Table 1, components used**

| | |
|---|---|
| Nitrile rubber | Nitrile-butadiene rubber |
| DINP | Diisononyl phthalate |
| Liquid epoxy | DER 331 liquid epoxy |
| Polyisobutylene | Synthetic polyisobutylene rubber, Average molecular weight 1300 g/mol |
| TiO₂ | Titanium dioxide |
| Silicium dioxide | Fumed silica |
| CaCO₃ mixture | Mixture of natural ground-, precipitated- and coated calcium carbonate |
| PVC Emulsion | K value = 70 |
| PVC micro suspension | K value = 68 |
| Dicy | Dicyandiamide |
| ZMBT | Zinc dimethyl dithiocarbamate |
| TMTD | Tetramethylthiuram disulfide |
| Imidazole | Imidazole, Merck |
| Urea | N,N-Dimethylurea, Merck |
| Azo | Azodicabonamide |
| DNPT | Dinitrosopentamethylene tetramine |
| NaHCO₃ | Sodium bicarbonate |

The obtained compositions were evaluated for adhesion, penetration, mechanical properties and volume changes. The results are shown in figure 2.

### Expansion in %

The expansion is quantified for each sample by measuring the density of a bead of test material with approximately 5 mm radius and a length of 50 mm before and after expansion. The densities were determined according to DIN EN ISO 1183 using the water immersion method (Archimedes principle) in deionized water and a precision balance to measure the mass. For testing the expansion, the test materials were expanded at 160°C for 25 minutes.

### Adhesion test, tensile shear strength (TSS) (DIN EN 1465)

Cleaned and then oiled with a 90% heptan/10 % oil-solution, test specimens of steel (thickness 0.8 mm) were bonded with the compositions on an adhesive surface of 25 × 20 mm using teflon spacers in a layer thickness of 0.2 mm and cured.
Curing conditions: 25 min at 160°C oven temperature.
The tensile shear strength was determined on a tensile machine at a tensile speed of 10 mm / min in a 3-fold determination according to DIN EN 1465.

The following visual assessment of the fracture appearance obtained from tensile shear strength test was used: The results were divided into CF (cohesive fracture) and AF (adhesive fracture) and the amount of the mentioned fracture was determined in % of the total fracture pattern.

### Penetration (uncured composition)

The penetration was measured by cone penetration with additional 150g weight (Unit: 1/10mm) according to ASTM D 217/02.

### Viscosity

The viscosity of the compositions E1-E5 were measured and found to be between 50 to 500 Pas at 25°C, the viscosity being determined oscillographically by means of a rheometer with heatable plate (MCR 301, AntonPaar) (slot 1000 µm, measuring plate diameter: 25 mm (plate/plate), deformation 0.01 at 5 Hz, temperature: 25°C).

### Elongation/E-modulus

To determine the mechanical properties, the composition was brought into hand-molded form in accordance with ISO 527, Part 2, 1B and cured for 30 min at 160 °C. After a conditioning time of 1 hour at 23 ° C, the modulus of elasticity was measured in the range of 1% tangent curve ("E modulus"), the tensile strength and elongation at break of the test specimens produced in this way in accordance with ISO 527 on a Zwick Z020 tensile testing machine measured at the temperature specified in the table and a test speed of 50 mm / min.

**Table 2**

| | R1 | R2 | E1 | E2 | E3 | E4 | R3 | E5 | R4 | R5 | R6 | R7 | R8 | R9 | R10 | R11 |
|---|---|---|---|---|---|---|---|---|---|---|---|---|---|---|---|---|
| Nitrile rubber | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 |
| DINP | 31.6 | 31.6 | 31.6 | 31.6 | 31.6 | 31.6 | 31.6 | 31.6 | 31.6 | 31.6 | 31.6 | 31.6 | 31.6 | 31.6 | 31.6 | 31.6 |
| Liquid epoxy | 8.1 | 8.1 | 8.1 | 9.1 | 8.1 | 8.1 | 8.1 | 8.1 | 8.1 | 8.1 | 8.1 | 8.1 | 8.1 | 8.1 | 8.1 | 8.1 |
| Polyisobutylene | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 | 1.6 |
| TiO₂ | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 | 0.8 |
| Silicium dioxide | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 | 2.3 |
| CaCO₃ mixture | 29.6 | 29.5 | 29.18 | 28.18 | 29.28 | 29.38 | 29.48 | 28.98 | 28.98 | 28.98 | 29.7 | 26.88 | 29.58 | 26.88 | 26.88 | 29.2 |
| PVC emulsion | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 | 15.1 |
| PVC suspension | 10 | 10 | 10 | 10 | 10 | 10 | 10 | 10 | 10 | 10 | 10 | 10 | 10 | 10 | 10 | 10 |
| Dicy | 0.2 | 0.2 | 0.2 | 0.2 | 0.1 | 0.1 | 0 | 0.1 | 0.1 | 0.1 | 0.50 | 3.32 | 0 | 0 | 0 | 0 |
| ZMBT | | | | | | | | | | | | | | 3.32 | | |
| TMTD | | | | | | | | | | | | | | | 3.32 | |
| Imidazole | | | | | | | | | | | | | | | | 1.00 |
| Urea | 0.3 | 0.3 | 0.62 | 0.62 | 0.62 | 0.62 | 0.62 | 0.62 | 0.62 | 0.62 | 0 | 0 | 0.62 | 0 | 0 | 0 |
| Azo | 0.1 | 0.2 | 0.2 | 0.2 | 0.2 | 0.1 | 0.1 | 0.5 | | | 0 | 0 | 0 | 0 | 0 | 0 |
| DNPT | | | | | | | | | 0.5 | | | | | | | |
| NaHCO₃ | | | | | | | | | | 0.5 | | | | | | |
| Total | 100 | 100 | 100 | 100 | 100 | 100 | 100 | 100 | 100 | 100 | 100 | 100 | 100 | 100 | 100 | 100 |
| Ratio UR/CA | 1.5 | 1.5 | 3.1 | 3.1 | 6.2 | 6.2 | | 6.2 | 6.2 | 6.2 | 0 | 0 | | | | |
| Ratio UR/AZ | 3 | 1.5 | 3.1 | 3.1 | 3.1 | 6.2 | 6.2 | 1.24 | | | | | | | | |
| Ratio A/CA | 40.5 | 40.5 | 40.5 | 45.5 | 81 | 81 | | 81 | 81 | 81 | 16.2 | 2.4 | | | | |
| Ratio A/UR | 27 | 27 | 13.1 | 14.7 | 13.1 | 13.1 | 13.1 | 13.1 | 13.1 | 13.1 | | | | | | |
| Ratio A/AZ | 81 | 40.5 | 40.5 | 45.5 | 40.5 | 81 | 81 | 16.2 | | | | | | | | |
| Adhesion | AF | AF | CF | CF | CF | CF | AF | CF | AF | AF | AF | AF | AF | AF | AF | AF |
| Penetration (1/10mm) | | | 285 | 300 | | | | | | | | | 300 | | | |
| Elongation (%) | | | 112 | 107 | 115 | 122 | | | | | | | 80 | | | |
| E-mod. (MPa) | | | 4.5 | 5 | 4.2 | 4.5 | | | | | | | 10 | | | |
| Expansion (%) | | | | | 45 | 18 | | | | | | | | | | |

## Claims

1. A rubber composition comprising:
- at least one liquid epoxy resin **A,** preferably in an amount of 4 to 20 wt.-%, preferably 6 to 15 wt.-%, more preferably 7 to 12 wt.-%, most preferably 7.5 to 10 wt.-%, based on the total weight of the rubber composition;
- at least one rubber, preferably a synthetic rubber, more preferably a diene rubber;
- at least at least one curing agent **CA,** preferably a latent curing agent, for epoxy resins;
- at least one substituted urea **UR;**
- at least one azo compound **AZ,** preferably selected from the list consisting of azodicarbonamide, azoisobutytronitrile, azocyclohexyl nitrile and azodiamino benzene, more preferably azodicarbonamide;
- preferably at least one polyvinylchloride resin and/or acrylic resin powder;
wherein the weight-ratio of the at least one liquid epoxy resin **A** to the at least one substituted urea **UR (A/UR)** is from 8 to 20, preferably 10 to 16, more preferably 11 to 15, most preferably 11.5 to 13.5.

2. The rubber composition of claim 1 wherein the amount of substituted urea **UR** is 0.4 to 1.0 wt.-%, preferably 0.5 to 0.8 wt.-%, more preferably 0.55 to 0.75 wt.-%, most preferably 0.6 to 0.7 wt.-%, based on the total weight of the rubber composition.

3. The rubber composition of anyone of the preceding claims, **characterized in that** the substituted urea **UR** is of the formula (Ia) or (Ib) 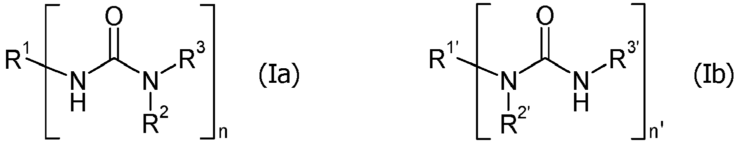
where R¹ is H or an n-valent aliphatic, cycloaliphatic or araliphatic radical;
R² and R³
either
each independently of one another are an alkyl group or aralkyl group;
or together are a divalent aliphatic radical having 3 to 20 C atoms which is part of an optionally substituted heterocyclic ring having 5 to 8, preferably 6, ring atoms;
R^{1'} is an n'-valent aliphatic, cycloaliphatic or araliphatic radical;
R^{2'} is an alkyl group or aralkyl group or alkylene group;
R^{3'} independently at each occurrence is H or an alkyl group or aralkyl group; and
n and n' are each from 1 to 4, more particularly 1 or 2.

4. The rubber composition of claim 3, **characterized in that** R¹ is H and R² and R³ are each a methyl, ethyl or propyl group, preferably each a methyl group.

5. The rubber composition of anyone of the preceding claims, **characterized in that** weight-ratio of the at least one liquid epoxy resin **A** to the at least one curing agent **CA (A/CA)** is from 5.5 to 150, preferably 8.0 to 100, more preferably 15 to 90, most preferably 25 to 85.

6. The rubber composition of anyone of the preceding claims wherein the amount of curing agent **CA** is 0.05 to 1.5 wt.-%, preferably 0.075 to 1.0 wt.-%, more preferably 0.08 to 0.5 wt.-%, most preferably 0.09 to 0.3 wt.-%, based on the total weight of the rubber composition.

7. The rubber composition of anyone of the preceding claims, **characterized in that** the weight-ratio of the at least one liquid epoxy resin **A** to the at least one azo compound **AZ (A/AZ)** is from 5.5 to 150, preferably 8.0 to 100, more preferably 15 to 90, most preferably 25 to 85.

8. The rubber composition of anyone of the preceding claims wherein the amount of azo compound **AZ** is 0.05 to 1.5 wt.-%, preferably 0.075 to 1.0 wt.-%, more preferably 0.08 to 0.5 wt.-%, most preferably 0.09 to 0.3 wt.-%, based on the total weight of the rubber composition.

9. The rubber composition of anyone of the preceding claims, **characterized in that** the liquid epoxy resin **A** is of the formula (I) 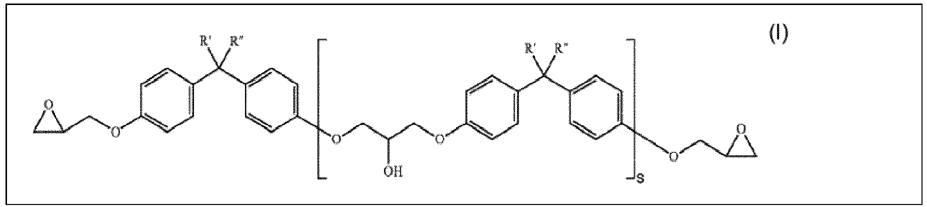 where R' and R" are each independently a hydrogen atom or a methyl group and s has an average value of 0 to 1, preferably of less than 0.2.

10. The rubber composition of anyone of the preceding claims, wherein the at least one rubber is incorporated in an amount from 0.5 to 15 %, preferably 1 to 10 wt.-%, preferably 1 to 5 wt.-%, more preferably 1 to 3 wt.-% and most preferably 1.5 to 2.5 wt.-%, relative to the total weight of the rubber composition.

11. The rubber composition of anyone of the preceding claims, wherein the at least one polyvinylchloride resin and/or acrylic resin powder, preferably polyvinylchloride resin, is incorporated in an amount from 5 to 45 wt.-%, preferably in an amount of 10 to 40 wt.-%, preferably in an amount of 15 to 35 wt.-% and most preferably in an amount of from 20 to 30 wt.-%, relative to the total weight of the rubber composition.

12. Use of the rubber composition according to any one of claims 1 to 11 as a sealer for closed spaces, in particular as a sealer for closed spaces in vehicle parts.

13. A method for filling a closed space comprising the steps of
- inserting a rubber composition according to any one of claims 1 to 11 into a closed space, and
- heating the closed space with the rubber composition to a temperature above the activation temperature of the curing agent to cure the rubber composition.

14. The method of claim 13, wherein the closed space is a closed space in a vehicle part.

15. A vehicle part which is obtainable by the method of claims 13 or 14.
